# EUROPÄISCHE PATENTANMELDUNG

(11) **EP 0 914 983 A2**
(43) Veröffentlichungstag der Anmeldung: **12.05.1999**
(21) Anmeldenummer: 98119439.2
(22) Anmeldetag: 15.10.1998
(51) Int. Cl.: B60J 7/22, B60J 7/02

(54) **Schiebedachanordnung für ein Fahrzeug**

(30) Priorität: 10.11.1997 DE 19749586
(71) Anmelder: Volkswagen Aktiengesellschaft, 38436 Wolfsburg (DE)
(72) Erfinder: Drescher, Thomas, 38518 Gifhorn (DE); Hass, Christian, 38444 Wolfsburg (DE); Maciejewski, Bernhard, 38518 Gifhorn (DE)

(57) **Zusammenfassung**

Bei einer Schiebedachanordnung eines Kraftfahrzeugs ist ein Deckel (1) in seiner eine Dachöffnung (2) freigebenden Öffnungsstellung (1') in eine stirnseitig offene Aufnahmekammer (4) verschoben und bildet mit einer horizontalen Begrenzung (5) der Aufnahmekammer (4) einen Spalt (7). Damit dieser nicht Anlaß zu Wummergeräuschen gibt, sind Mittel (9) vorgesehen, die gesteuert durch Verschiebebewegungen des Deckels (1) nur bei in der Öffnunglage (1') befindlichem Deckel den Spalt (7) zumindest weitgehend absperren.

## Beschreibung

Die Erfindung betrifft eine Schiebedachanordnung für ein Fahrzeug gemäß dem Oberbegriff des Patentanspruchs 1. Schiebedachanordnungen dieses grundsätzlichen konstruktiven Aufbaus sind in einer Vielzahl unterschiedlicher Ausbildungen aus der Patentliteratur der internationalen Klasse B60J7/02 bekannt sowie im praktischen Einsatz.

Ein grundsätzliches Problem bei derartigen Schiebedächern besteht in der Vermeidung des Auftretens von Windgeräuschen in bestimmten Fahrgeschwindigkeitsbereichen; diese Geräusche werden auch als Wummergeräusche bezeichnet. Als eigentliche Ursache für die Wummergeräusche wurden bisher Beeinflussungen der Luftströmung im Bereich der vorderen Kante der Dachöffnung der Schiebedachanordnung angesehen. Demgemäß zielen Gegenmaßnahmen in Gestalt von Windabweisern, wie sie in der Patentliteratur der internationalen Klasse B60J7/22 beschrieben sind, darauf ab, die Strömungsverhältnisse insbesondere im vorderen Bereich der Dachöffnung zu beeinflussen.

Wie erfindungsgemäße Untersuchungen ergeben haben, existiert jedoch bei vielen Schiebedachkonstruktionen auch im Bereich der Hinterkante der Dachöffnung eine Ursache für das Entstehen von Wummergeräuschen, nämlich in Gestalt zumindest eines Spalts, den der in seiner Öffnungslage, d. h. in der Aufnahmekammer, befindliche Deckel mit zumindest einer horizontalen Begrenzung der Aufnahmekammer bzw. einer horizontalen stirnseitigen Ausnehmung derselben bildet. Dies kann also ein Spalt oberhalb oder unterhalb des Deckels sein; gegebenenfalls können beide Spalte zu Wummergeräuschen Anlaß geben. Da, wie gesagt, die Aufnahmekammer stirnseitig offen ist (damit der Durchtritt des verschiebbaren Deckels möglich ist), können die definierten Spalte von Luft durchströmt werden, die durch die jetzt freigegebene Dachöffnung eintritt; diese Luftströmungen können Anlaß zu den definierten Geräuschen geben.

Der Erfindung liegt die Aufgabe zugrunde, eine Schiebedachanordnung gemäß dem Oberbegriff des Patentanspruchs 1 mit einfachen Mitteln dahingehend zu verbessern, daß das Entstehen von Wummergeräuschen an dieser Stelle unterbunden ist. Dies schließt nicht aus, daß zusätzlich zu den zu beschreibenden erfindungsgemäßen Maßnahmen auch Maßnahmen im Bereich der Vorderkante der Dachöffnung vorgesehen sind, damit eine generell geräuschoptimierte Schiebedachanordnung geschaffen ist.

Die erfindungsgemäße Lösung der definierten Aufgabe besteht in den kennzeichnenden Merkmalen des Hauptanspruchs, vorteilhafte Ausbildungen der Erfindung beschreiben die Unteransprüche.

Schlagwortartig kann man die Erfindung also dahingehend charakterisieren, daß durch "Verschließen" des zumindest einen oben definierten, zu Wummergeräuschen Anlaß gebenden Spalts an der Vorderkante des in seiner Öffnungslage befindlichen Deckels ein Durchströmen des Spalts mit durch die Dachöffnung eingeströmter Luft verhindert wird. Als weitere Vorteile ergeben sich die Verhinderung des Eintritts von Staub und dergleichen in die Aufnahmekammer bei geöffnetem Deckel und die optische Kaschierung des Spalts.

Die in Anspruch 2 angegebene Lösungsvariante der Erfindung wird man dann einsetzen, wenn der zu Wummergeräuschen Anlaß gebende Spalt sich oberhalb des in seiner Öffnungslage liegenden Deckels befindet. Diese Ausführungsform der Erfindung bietet die vorteilhafte Möglichkeit, die Mittel gegen das Auftreten von Wummergeräuschen zugleich als aerodynamische Mittel auf der dachseitigen Fahrzeugaußenhaut auszunutzen, beispielsweise dann, Wenn hinter der Dachöffnung auf dem Fahrzeugdach eine Gepäckaufnahme (Dachreling) vorgesehen ist.

Die in Anspruch 3 beschriebene Lösungsvariante der Erfindung bietet dagegen die Möglichkeit, sie gleichsam als fahrzeuginnere aerodynamische Einrichtung zur gezielten Ausrichtung der Frischluftströmung auszunutzen, beispielsweise durch düsenartige Ausbildung.

Mehrere Ausführungsbeispiele der Erfindung werden im folgenden anhand der Zeichnung erläutert. Es zeigen:
- Figur 1: in einem Teillängsschnitt durch ein Kraftfahrzeugdach eine erste Ausführung der Erfindung,
- Figur 2: ebenfalls im Längsschnitt eine zweite Ausführung, die
- Figuren 3, 4 und 5: Einzelheiten der Lösung nach Figur 2.

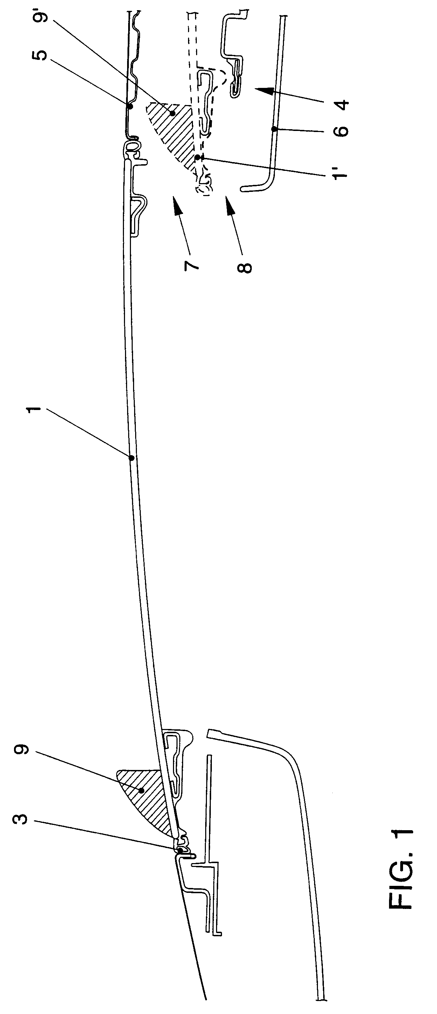

Betrachtet man zunächst Figur 1, so ist bei 1 der Deckel der Schiebedachanordnung in seiner die Dachöffnung 2 verschließenden Schließlage wiedergegeben. Die Dachöffnung 2 wird in üblicher Weise von der Dichtung 3 umschlossen. Auf Darstellung und Beschreibung von Einrichtungen zur Erzeugung der verschiedenen Bewegungen des Deckels 1 kann verzichtet werden, da sie hinlänglich bekannt sind.

Durch Absenken aus seiner Schließlage bzw. aus der Ebene der Dachöffnung 2 und im wesentlichen horizontales Verschieben in Fig. 1 nach rechts (in Richtung Fahrzeugheck) in seine Öffnungslage 1' kann der Deckel unter Freigabe der Dachöffnung 2 in eine Öffnungslage bewegt werden, in der er sich innerhalb der dachseitigen Aufnahmekammer 4 befindet. Sie wird nach oben durch das eigentliche Dach 5 und nach unten durch ein Dachinnenblech oder einen Dachhimmel 6 begrenzt. Dach 5 und Teil 6 erstrecken sich im wesentlichen waagerecht. In diesem Ausführungsbeispiel ist angenommen, daß sich der Deckel 1' in der Aufnahmekammer 4 im wesentlichen in mittlerer Höhe zwischen den Teilen 5 und 6 befindet, also seine (linke) Vorderkante mit den Teilen 5 und 6 jeweils einen Spalt 7 bzw. 8 bildet. Weiterhin ist angenommen, daß in diesem Fall nur der Spalt 7 bei freigegebener Dachöffnung 2 Anlaß zu Wummergeräuschen gibt.

Um die Ausbildung einer geräuscherregenden Luftströmung zumindest insoweit zu unterbinden, daß die Wummergeräusche vermieden sind, trägt der Deckel 1 den spoilerartigen Aufsatz 9, der in der Öffnungslage des Deckels mit 9' bezeichnet ist und der bei in Schließlage befindlichem Deckel 1 nach oben über die Kontur des eigentlichen Fahrzeugdachs 5 hinausragt. Bei in Schließlage befindlichem Deckel 1 kann der Aufsatz 9 demgemäß zur Erzielung gewünschter aerodynamischer Wirkungen im Bereich des Fahrzeugdachs ausgenutzt werden, während der in seiner Lage 9' innerhalb der Aufnahmekammer 4 befindliche Aufsatz eine zu Wummergeräuschen Anlaß gebende Luftströmung durch den Spalt 7 unterbindet. Dies kann im Idealfall durch vollständige Absperrung des Spalts 7 mittels des Aufsatzes 9' geschehen; in vielen Fällen mag jedoch eine nur teilweise Absperrung ausreichend sein.

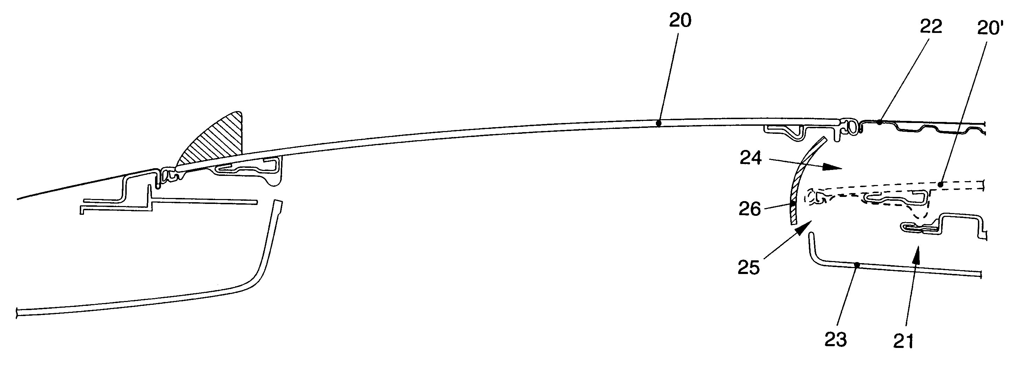

In dem Ausführungsbeispiel nach Fig. 2 ist der in seiner Schließlage befindliche Deckel mit 20 bezeichnet; in seiner Öffnungslage 20' befindet er sich wiederum innerhalb seiner Aufnahmekammer 21, gebildet durch das eigentliche Dach 22 und den Dachhimmel 23. Auch hier bildet der Deckel 20' im Bereich seiner vorderen, d. h. in Fig. 2 linken Kante mit den Teilen 22 und 23 Spalte 24 und 25, die in diesem Ausführungsbeispiel beide zu Wummergeräuschen Anlaß geben können. Daher ist eine nur bei in Öffnungslage befindlichem Deckel in ihrer gezeichneten Wirkstellung befindliche, sonst nach oben weggeschwenkte Strömungsblende 26 vorgesehen, die beide Spalte 24 und 25 zumindest weitgehend gegen die Ausbildung einer Luftströmung abschirmt.

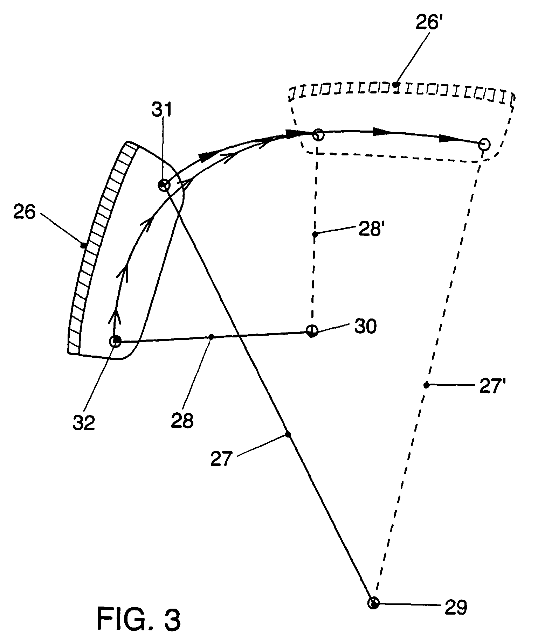

Fig. 3 zeigt nun eine erste Möglichkeit zur Bewegung der Strömungsblende 26 aus ihrer Wirklage vor der offenen Stirnseite der hier nicht gezeichneten Aufnahmekammer 21 für den in seiner Öffnungslage befindlichen Deckel in eine Lage 26' innerhalb dieser Aufnahmekammer oberhalb der Deckellage zum Zwecke der Freigabe des Deckels zur Verschiebung in seine Schließlage. Dazu dienen beidseitig an der Strömungsblende angreifende Schwenkführungen mit jeweils zwei Schwenkarmen 27 und 28, die unterschiedlich lang sind, unterschiedliche Schwenkachsen 29 und 30 haben und an unterschiedlichen Stellen 31 und 32 der Strömungsblende 26 derart angreifen, daß durch in Fig. 3 im Uhrzeigersinne erfolgende Schwenkbewegungen der Schwenkarme 27 und 28 in ihre Positionen 27' und 28' die Strömungsblende 26 in ihre bei 26' gezeichnete, im wesentlichen horizontale Lage innerhalb der beschriebenen Aufnahmekammer 21 (s. Fig. 2) geschwenkt wird.

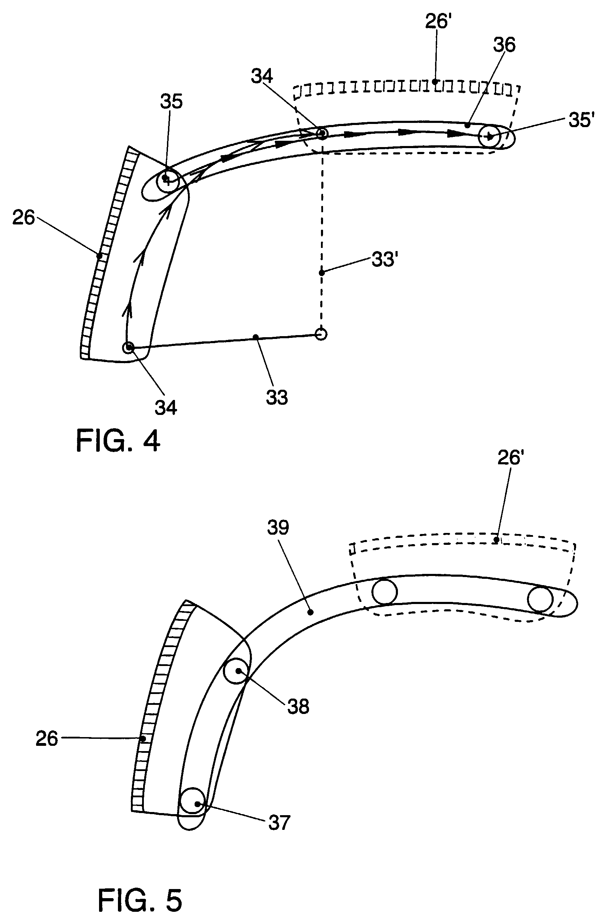

In der Ausführungsform nach Fig. 4 enthält jede Schwenkführung nur einen Schwenkarm 33, der bei 34 an der Strömungsblende 26 angreift und diesen Angriffspunkt bei Schwenkung im Uhrzeigersinne (Hebelstellung 33') in seine Position 34' verschwenkt. Das bei dieser Bewegung vordere Ende der Strömungsblende 26 wird mittels des Zapfens 35, der in der Kulissenführung 36 läuft, weitgehend horizontal nach rechts in seine Position 35' verschoben, so daß die Strömungsblende nunmehr die im wesentlichen horizontale Lage 26' in der Aufnahmekammer 21 einnimmt.

Gemäß Fig. 5 ist es auch möglich, auf Schwenkhebel vollständig zu verzichten und der Strömungsblende 26 an ihren Endbereichen Zapfen 37 und 38 anzuordnen, die beide in der Kulissenführung 39 laufen und bei Bewegungen der Strömungsblende 26 in Fig. 5 nach rechts eine im wesentlichen horizontale Lage 26' dieser Blende sicherstellen.

In allen Fällen befindet sich die Strömungsblende in ihrer Lage 26' in einem Spalt oberhalb des in seiner Öffnungslage befindlichen Deckels, so daß dieser ungehindert in seine Schließstellung verschoben werden kann. Dabei kann die Bewegung der Strömungsblende 26 durch unterschiedliche Antriebsmittel erzielt werden. So kann ein elektromotorischer Antrieb mit einem Elektromotor vorgesehen sein, der bei Betätigung eines Schalters für die Verschiebebewegungen des Deckels aus seiner Öffnungsstellung erregt wird und dann die Strömungsblende in ihre Position 26' bewegt. Auch ist es möglich, unter Verwendung von Seilen, Federn, Zügen und anderen mechanischen Mitteln die beginnende Verschiebebewegung des Deckels aus seiner Öffnungsstellung auf die Strömungsblende zu Erzeugung ihrer Bewegung zu übertragen. Hier fällt jedem Fachmann eine Vielzahl von Möglichkeiten ein.

Mit der Erfindung ist demgemäß eine Optimierung einer Schiebedachanordnung für ein Fahrzeug hinsichtlich der Vermeidung von Wummergeräuschen geschaffen.

## Patentansprüche

1. Schiebedachanordnung für ein Fahrzeug mit einem Deckel, der aus einer Schließlage, in der er eine Öffnung im Fahrzeugdach verschließt, in eine Öffnungslage im wesentlichen verschiebbar ist, in der er die Öffnung freigibt und von einer stirnseitig offenen dachseitigen Aufnahmekammer unter Bildung zumindest eines zu Wummergeräuschen Anlaß gebenden stirnseitigen Spalts zwischen dem Deckel und einer horziontalen Begrenzung der Aufnahmekammer aufgenommen ist, dadurch gekennzeichnet, daß Mittel (9) vorgesehen sind, die nur bei in seiner Öffnungslage (1') befindlichem Deckel Luftströmungen in den Spalt (7) zumindest weitgehend unterbinden.

2. Schiebedachanordnung nach Anspruch 1, dadurch gekennzeichnet, daß der Deckel (1) im Bereich seiner vorderen Kante einen in der Schließlage über die Dachebene hinausragenden spoilerartigen Aufsatz (9) trägt, der in der Öffnungslage (1') des Deckels in einem Spalt (7) zwischen diesem und einer oberen horizontalen Begrenzung (5) der Aufnahmekammer (4) liegt.

3. Schiebdachanordnung nach Anspruch 1, dadurch gekennzeichnet, daß an der offenen Stirnseite der Aufnahmekammer (21) eine bei Verschiebebewegungen des Deckels (20) aus seiner Öffnungslage (20') heraus wegschwenkende Strömungsblende (26) vorgesehen ist.

4. Schiebedachanordnung nach Anspruch 3, dadurch gekennzeichnet, daß der Strömungsblende (26) eine Schwenkführung (27, 28) zugeordnet ist, die sie im wesentlichen vor Verschiebebewegungen des Deckels (20) aus seiner Öffnungslage (20') heraus aus einer im wesentlichen senkrechten Lage vor der offenen Stirnseite in eine im wesentlichen horizontale Lage (26') in der Aufnahmekammer (21) überführt.

5. Schiebedachanordnung nach Anspruch 4, dadurch gekennzeichnet, daß die Schwenkführung Schwenkarme (27, 28) unterschiedlicher Länge sowie mit unterschiedlichen Schwenkachsen (29, 30) und unterschiedlichen Angriffsstellen (31, 32) an der Strömungsblende (26) enthält.

6. Schiebedachanordnung nach Anspruch 4, dadurch gekennzeichnet, daß die Schwenkführung Kulissenführungen (36) enthält.
